(19) Europäisches Patentamt
European Patent Office
Office européen des brevets

(11) **EP 4 462 625 A1**

(12) **EUROPÄISCHE PATENTANMELDUNG**

(43) Veröffentlichungstag:
**13.11.2024 Patentblatt 2024/46**

(21) Anmeldenummer: **23172782.7**

(22) Anmeldetag: **11.05.2023**

(51) Internationale Patentklassifikation (IPC):
*H02J 3/00* (2006.01)        *H02J 13/00* (2006.01)

(52) Gemeinsame Patentklassifikation (CPC):
**H02J 13/00002; H02J 3/00;** H02J 2203/10;
H02J 2203/20

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder: **Henselmeyer, Sylwia
91052 Erlangen (DE)**

(74) Vertreter: **Siemens Patent Attorneys
Postfach 22 16 34
80506 München (DE)**

(54) **VERFAHREN FÜR EINE ZUSTANDSSCHÄTZUNG EINES ELEKTRISCHEN ENERGIEVERTEILUNGSNETZES, ZUSTANDSSCHÄTZUNGSANORDNUNG UND COMPUTERPROGRAMMPRODUKT**

(57)     Gegenstand der vorliegenden Erfindung ist ein Verfahren für eine Zustandsschätzung eines elektrischen Energieverteilungsnetzes,
dadurch gekennzeichnet, dass
mittels einer Lastflussberechnungseinrichtung anhand eines Netzmodells, das Knotenpunkte und Schalteinrichtungen und Messsorte berücksichtigt, für eine Vielzahl von Lastzuständen und für eine Vielzahl von Schaltzuständen der Schalteinrichtungen Lastflussberechnungen durchgeführt und das jeweilige Lastflussergebnis in einem Lastflussdatensatz gespeichert wird, wobei der Lastflussdatensatz für jeden Knotenpunkt im Netzmodell eine Wahrscheinlichkeitsverteilung für jeweils einen Wert mindestens einer ersten elektrischen Größe bereitstellt, und dass
mittels einer Zustandsschätzungseinrichtung eine Zustandsschätzung, die die jeweiligen Spannungswerte an den Knotenpunkten beinhaltet, für das elektrische Energieverteilungsnetz bestimmt wird, wobei
unter Berücksichtigung des Lastflussdatensatzes und aktueller Schaltzustände von Schalteinrichtungen und aktueller Messwerte, die an den Messorten erfasst wurden, ein Hidden-Markov-Modell verwendet wird, um einen wahrscheinlichsten Wert für eine zweite elektrische Größe für jeden Knotenpunkt zu bestimmen.
     Ferner sind Gegenstände der Erfindung eine entsprechende Zustandsschätzungsanordnung und ein entsprechendes Computerprogrammprodukt.

FIG 3

EP 4 462 625 A1

**Beschreibung**

Die Erfindung betrifft ein Verfahren für eine Zustandsschätzung eines elektrischen Energieverteilungsnetzes gemäß dem Oberbegriff des Anspruchs 1, eine Zustandsschätzungsanordnung gemäß dem Oberbegriff des Anspruchs 10 und ein Computerprogrammprodukt gemäß Anspruch 14.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leistelle übermittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "inteligent devices" (IEDs) empfangen und verarbeitet, um die Leistungsschalter und die Trennschalter usw. anzusteuern. In der Leistelle ist bisher häufig ein lokales Rechenzentrum vorgesehen, auf dem die Leitstellensoftware wie z.B. Sprectrum Power läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leistellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokale Vorhersage für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmanagement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-1-4244-7398-4 und "Real-Time Estimation of Loads in Radial and Unsymmetrical Three-Phase Distribution Networks" von Dzafic et al., 2013 IEE 0885-8950, bekannt.

Derzeit messen Verteilnetzbetreiber im Schnitt ca. 20% der Verteilnetzknoten. Der Rest des Verteilnetzes ist unbeobachtet. Im Niederspannungsbereich werden vermehrt Smart Meter eingesetzt, sie werden jedoch nicht wie die in Leitstellen empfangenen Messwerte in Echtzeit bereitgestellt, sondern treffen mehrere Stunden nach der Messung ein. Sie sind also für die Berechnung des Netzzustandes im Mittelspannungsbereich ohne weitere Verarbeitung wie z.B. in Vorhersagen nicht brauchbar.

Trotz allem wollen die Verteilnetzbetreiber unterrichtet werden, wenn auch an den unbeobachteten Knoten Grenzwertverletzungen auftreten. Oder wenn die wenigen verfügbaren Messwerte Inkonsistenzen zueinander aufweisen. Für diesen Zweck wird die Zustandsschätzung eingesetzt.

Gleichzeitig verfügen die Netzbetreiber über qualitativ gute Netzmodelle, so dass Lastflussverfahren sehr erfolgreich eingesetzt werden können und zuverlässige Ergebnisse liefern.

Klassische Verfahren für Zustandsschätzung aus dem Bereich der Übertragungsnetze sind in Verteilnetzen schwer anwendbar auf Grund der fehlenden gemessenen Information an im Schnitt 80% der Netzknoten. Daher behelfen sich die klassischen Verfahren der Pseudomesswerte, mit deren Hilfe die Lastinformation modelliert wird. Diese Modelle sind jedoch sehr ungenau und erfordern meist weitere Verfahren wie z.B. die Lastenskalierung, um die Lastinformation mit den gemessenen Werten zu initialisieren. Insbesondere dieses Verfahren erfordert viele Fallunterscheidungen (abhängig von verfügbaren Messwerten, deren Platzierung im Netz und Verfügbarkeit von verteilter Erzeugung) und ist an sich nicht wirklich genau. Von der Genauigkeit der Lastenskalierung hängt jedoch das Konvergenzverhalten und die Treffsicherheit der Zustandsschätzung an den Messstellen ab.

Zusätzlich erfordern klassische Zustandsschätzungsverfahren sowie "Distribution System State Estimation" (DSSE) die Lösung eines unterbestimmten Gleichungssystems mittels Newton Raphson. Bei ungeeigneter Gewichtung der Messwerte oder Abhängig von der Wahl der Zustandsvariablen (Spannungen, Ströme oder Leistungen) kann es zu Konvergenzproblemen kommen. Auch Loop-Topologie scheint eine Herausforderung für diese Verfahren zu sein, wenn nicht Spannungen als Zustandsvariablen gewählt sind.

Neben den analytischen Verfahren kommen in letzter Zeit auch neuronale Netze (insbesondere "Multi Layer Perceptron Networks") zur Anwendung. Die größten Nachteile der neuronalen Netze sind jedoch:

- Starre Struktur (fixe Anzahl von Inputs und Outputs): Für jede Konfiguration von Messwerten und Schalterstellungen ist ein neuronales Netz erforderlich.
- Trainingsdaten müssen bereitgestellt sein für jedes einzelne Netz, das eine bestimmte Konfiguration aus Messwerten und Schalterstellungen repräsentiert.
- Training muss ausgeführt werden für jedes einzelne Netz.
- Netze müssen gespeichert und verwaltet werden.
- Netze müssen neu trainiert werden, wenn die Fehlerrate zu groß wird.

Ausgehend von bekannten Verfahren für eine Zustandsschätzung stellt sich an die Erfindung die Aufgabe, ein Verfahren anzugeben, mit dem vergleichsweise einfach, schnell und zuverlässig der Zustand eines elektrischen Energieverteilnetzes geschätzt werden kann.

Die Erfindung löst diese Aufgabe durch ein Verfahren nach Anspruch 1.

Ein Zustand ist z.B. eine Gesamtmenge von Werten elektrischer Größen, die an verschiedenen Punkten in dem Energieverteilnetz zu einem vorgegebenen Zeitpunkt vorliegen. Beispielsweise umfasst der Zustand die Spannungen (i.d.R. als komplexe Zahlen), die an den Netzpunkten vorliegen. Die Punkte bzw. Messpunkte können z.B. Knotenpunkte sein, d.h. Endpunkte einer Leitung oder eine Leitungskreuzung. Typischerweise werden an solchen Knotenpunkten auch Messorte für Messgeräte für elektrische Spannung, Stromstärke und ggf. Phasenwinkel vorgesehen. Eine Zustandsschätzung ist eine mit einem Computer berechnete Schätzung des Zustands, basierend auf verfügbaren Messwerten, d.h. das für diejenigen Knoten, die nicht mit Messgeräten beobachtet werden können, der Zustand bzw. die elektrischen Größen berechnet werden.

Ein Netzzustand bzw. eine Zustandsschätzung im Sinne der Erfindung umfasst beispielsweise eine Angabe über den Spannungsbetrag bzw. eine elektrische Spannung und den Spannungswinkel bzw. Phasenwinkel an jedem Netzwerkabschnitt. Ein Netzwerkabschnitt wird z.B. auch als "network bus" im Sinne des "bus-branch"-Modells bezeichnet. Er fungiert als ein Netzmodell-Verbindungspunkt, an dem modellierte Betriebsmittel des elektrischen Netzes wie Leitungen, Transformatoren, Verbraucher und Erzeuger elektrischer Energie verknüpft sein können.

Eine Einrichtung im Sinne der Erfindung weist beispielsweise Prozessoren, Datenspeicher und Bildschirme auf. Einrichtungen sind z.B. Computer wie z.B. Server, die Datenprozessorressourcen und Datenspeicherressourcen aufweisen und Daten mit anderen Computern austauschen können. Es kann sich auch um Softwaremodule handeln, die auf einer Cloud-Infrastruktur ausgeführt werden, d.h. eine eine räumlich verteilte Server- und Datenbankarchitektur.

Messeinrichtungen können beispielsweise Spannungsmessgeräte, Strommessgeräte, Phasenmessgeräte bzw. "Phasor measurement units (PMUs)", "Remote Terminal Units" oder Intelligente Stromzähler bzw. "Smart Meter", "Intelligent electronic devices (IEDs)" zur Überwachung von Schaltern und anderen Betriebsmitteln, Steuereinrichtungen z.B. für Intelligente Substations oder Schutzgeräte sein, die an den Messorten eingesetzt werden. Die Datenübertragung der Messdaten kann dabei z.B. nach dem IEC 61850 Protokoll oder nach dem Internet-Protokoll erfolgen. Es können per Powerline-Communication über das Stromnetz, oder per Funk z.B. per LTE (4G) oder per Kabel wie z.B. Ethernet oder Lichtwellenleiter Daten übertragen werden.

Ein Netzmodell ist z.B. eine Beschreibung der Topologie, d.h. der räumlichen Anordnung von Betriebsmitteln wie Schalteinrichtungen, Transformatoren, Verbrauchern bzw. Lasten usw. sowie Leitungen einschließlich der Betriebsparameter der Betriebsmittel. Beispielsweise enthält das Netzmodell Informationen über die räumliche Anordnung von Knotenpunkten, Schalteinrichtungen und Messsorten und/oder den Parameter der Betriebsmittel.

Lasten- und Erzeugerdaten sind verfügbar in Form von Gaußschen Verteilungen. Diese werden z.B. separat erstellt für jede 15 Minuten des Tages, des Wochentages und der Jahreszeit, was dem heutigen Standard bei den Verteilnetzbetreibern entspricht. Hiermit ergibt sich der Lastzustand des Energienetzes.

Die Schaltzustände sind beispielsweise ein offener oder ein geschlossener Zustand für jede Schalteinrichtung.

Das Lastflussergebnis wird für das jeweils zu berechnende Beispiel, d.h. den angenommenen Lastzustand, auf an sich übliche Weise mit einem Lastflussalgorithmus berechnet. Der Lastflussalgorithmus wird z.B. für unterschiedliche Topologien und unterschiedliche Tages- und Jahreszeiten (für jede 15 Minuten des Tages, eines bestimmten Wochentags und/oder einer Jahreszeit) ausgeführt. Dabei wird Monte-Carlo Sampling verwendet, um unterschiedliche Belastungsszenarios zu simulieren. Es kann eine große Anzahl, z.B. über 100, noch mehr bevorzugt über 1000, unterschiedliche Kombinationen von Lastzuständen und Schaltzuständen simuliert werden.

Der Lastflussdatensatz wird z.B. in einem Datenspeicher eines Computers, oder in einer Cloud-Datenspeicherlösung, abgelegt. Er muss i.d.R. nur einmal vorab berechnet werden und umfasst beispielsweise einige hundert oder einige tausend Lastflussergebnisse, die sich aus unterschiedlichen Last- und Schaltzuständen ergeben. Eine Aktualisierung kann durchgeführt werden, wenn durch Neuinstallationen von Geräten, Ausbau des Netzes mit neuen Leitungen, usw. die Topologie des Energieverteilnetzes verändert wird.

In Abhängigkeit von der Vielzahl der Lastflussergebnisse kann die Wahrscheinlichkeitsverteilung der ersten elektrischen Größe, z.B. Spannung, berechnet werden für jeden Knoten. Es kann z.B. eine gaußsche Normalverteilung angenommen werden, deren Mittelwert dem wahrscheinlichsten Fall entspricht. Mit anderen Worten ergibt sich z.B. für jeden Knoten ein wahrscheinlichster Spannungswert, der als Erwartungswert über die Vielzahl von Last- und Schaltzuständen dient.

Ein Hidden-Markov-Modell ist ein mathematisches Modell, das beispielsweise von Wikipedia bekannt ist (permanenter Link: https://de.wikipedia.org/w/index.php?title=Hidden_Markov_Mode l&oldid=224921402). Dabei wird davon ausgegangen, dass unbeobachtete Zustände ineinander übergehen können, wobei die Übergänge jedoch nicht direkt beobachtet werden können, sondern lediglich Ausgaben bzw. Emissionen des modellierten Systems. Bezogen auf die vorliegende Modellierung sind die unbeobachteten Zustände die an den Knotenpunkten tatsächlich vorliegenden Werte von elektrischen Größen, wobei im Energieverteilnetz nur ein Teil der Knoten als Messorte mit Messeinrichtungen ausgebildet wird, Emissionen bzw. Messwerte für die elektrischen Größen zu erfassen.

Aus dem Hidden-Markov-Modell wird auf einen wahrscheinlichsten Wert für eine zweite elektrische Größe für jeden Knotenpunkt geschlossen. Mithilfe der zweiten elektrischen Größe kann der Netzzustand als Zustandsschätzung bereitgestellt werden. Dabei ergibt sich der Netzzustand direkt, wenn als elektrische Größe die Spannung genutzt wird. Wird die Stromstärke ausgegeben, so kann auch die Spannung an allen Knotenpunkten berechnet werden. Das Hidden Markov Modell wird genutzt, um basierend auf den Messwerten und den aus dem Training gewonnenen Verteilungen die Zustandsvariablen für das elektrische Netz zu erhalten, die der komplexen Spannung oder dem komplexen Strom entsprechen. Die erhaltenen Zustandsvariablen für alle Netzknoten des Beispielnetzes sind das wahrscheinlichste Set unter Berücksichtigung der gegebenen Messwerte.

Grundsätzlich sind der reelle und der imaginäre Teil der komplexen Zustandsvariable bedingt unabhängig, so dass die beiden Komponenten parallel im Hidden Markov Modell durchlaufen werden könnten. Das wird am Beispiel der komplexen Spannung gezeigt.

$$P(V^{real}, V^{imag}) = P(V^{real})P(V^{imag})$$

Das bedeutet ebenfalls, dass die Zustandswechsel als bivariate Verteilungen modelliert werden können:

$$P(S_t|S_{t-1}) = 0.5(P(V_t^{real}|V_{t-1}^{real}) + P(V_t^{imag}|V_{t-1}^{imag}))$$

Um eine bivariate Verteilung bei Emissionswahrscheinlichkeiten zu erhalten, werden die separaten Verteilungen über den reellen und imaginären Teil ersetzt durch die Verteilung des Betrages.

$$P(P|V^{real}, V^{imag}) = P(P|V^{mag})$$

$$P(Q|V^{real}, V^{imag}) = P(Q|V^{mag})$$

$$P(I|V^{real}, V^{imag}) = P(I|V^{mag})$$

$$P(V|V^{real}, V^{imag}) = P(V|V^{mag})$$

Die gleichen Schritte können für Strom als Zustandsvariable gemacht werden.

Das Verfahren nutzt ein Netzmodell und eine oft in Leitstellensystemen schon verfügbare Lastflussapplikation, welche in diesem Kontext ohne weiteres eingesetzt werden kann. Es erwartet weiterhin nur sehr grobe Informationen über die Lasten, die normalerweise in den Leitstellensystemen verfügbar ist (Lastenverteilungen). Für das Verfahren spielt der Typ der verfügbaren Messwerte keine Rolle, und es kann auch sehr gut mit zeitweise ausgefallenen Messungen umgehen, weil das Hidden-Markov-Modell jeweils online erzeugt wird. Zusätzlich, weil es mit Verteilungen arbeitet, berücksichtigt es Messwerte schwächer, die grob fehlerhaft sind. An solchen Messungen fallen die Abweichungen zwischen den geschätzten und gemessenen Werten größer aus.

Die Genauigkeit der Schätzung wird verbessert durch eine verbesserte Beobachtbarkeit des Netzes, d.h. durch zusätzliche Messorte mit Messeinrichtungen. Dies hat einen positiven Einfluss auf die Berechnungszeit, weil zusätzliche Messwerte den möglichen Zustandsraum an den Knoten einschränken. Mit dem Verfahren können auch nichtsymmetrische Netze berechnet werden. In diesem Fall muss man Ströme als Zustandsvariablen wählen und drei Hidden Markov Modelle berechnen. Dieser Vorgang ist sehr gut parallelisierbar. Dabei kann z.B. das Hidden-Markov-Modell für jede Phase auf einem einzelnen Prozessor oder einem separaten Server-Computer berechnet werden, was die Geschwindigkeit erhöht. Das Verfahren unterstützt auch Loop-Topologien.

Das Verfahren basiert in einer Variante auf der Verwendung von finiten Hidden- Markov-Modellen. Es ist daher der Gruppe der Verfahren aus dem Bereich des maschinellen Lernens zuzuordnen. Anders als klassische Zustandsschätzungsverfahren aus dem Übertragungsnetzbereich braucht es nur eine grobe Spezifikation der Last und zeigt keine Sensitivität bezüglich der verfügbaren Messwerttypen im elektrischen Netz. Auch die Wahl der Zustandsvariablen hat keinen Einfluss auf die Stabilität der Lösungsfindung. Es gibt keine Konvergenzprobleme. Im Gegensatz zu neuronalen Netzen erfordert es kein Training und muss auch nicht für jede Messwertkonstellation und Schalterstellung ein separates Modell abspeichern und trainieren. Vielmehr speichert es nur Trainingsdaten ab, keine Modelle.

Die Genauigkeit der Zustandsschätzung hängt davon ab, wie gut die Datenvorbereitungsphase mit Hilfe von wiederholten Lastflussberechnungen durchgeführt wurde (dieselbe Einschränkung wie neuronale Netze) und wie groß die Inkonsistenzen in den SCADA-Messwerten sind (alle Verfahren gleichermaßen betroffen). Der erste Schritt ist jedoch trivial und kann durch wiederholte Ausführungen von Lastflussberechnungen auf unterschiedlichen Belastungsszenarien bereitgestellt werden.

Die Ausführungszeit für die Zustandsschätzung liegt über der Zeit, die erreicht werden kann mit neuronalen Netzen, aber unter der Zeit, die erforderlich ist, um die analytische Lösung bereitzustellen.

In einer bevorzugten Ausführungsform des erfindungsgemäßen Verfahrens wird für die Bestimmung des wahrscheinlichsten Werts für die zweite elektrische Größe ein Viterbi-Algorithmus verwendet. Die zweite elektrische Größe stellt dabei eine Zustandsvariable des Modells im eingangs erläuterten Sinne dar.

Dies ist ein Vorteil, weil auf einfache Weise die wahrscheinlichsten Werte der elektrischen Größen, die mithilfe des Hidden-Markov-Modells erkannt wurden, bestimmt werden können. Der Viterbi-Algorithmus ist beispielsweise von Wikipedia bekannt (permanenter Link: https://de.wikipedia.org/w/index.php?title=Viterbi-Algorithmus&oldid=213887390 ). Der Einsatz des Hidden-Markov-Modells zusammen mit dem Viterbi-Algorithmus erlaubt es, die wahrscheinlichste Folge von Zuständen auf den Netzknoten zu finden, die durch einen stochastischen Prozess erzeugt wurden, der teilweise beobachtbar ist durch die SCADA Messwerte.

In einer weiteren bevorzugten Ausführungsform des erfindungsgemäßen Verfahrens wird mittels einer ersten Auswahleinrichtung aus dem Lastflussdatensatz eine Untergruppe von Lastflussergebnissen ausgewählt und für die Zustandsschätzungseinrichtung bereitgestellt, wobei anhand eines Ähnlichkeitsmaßes die Ähnlichkeit von an Messorten gemessenen aktuellen Messwerten zu den Wahrscheinlichkeitsverteilungen ermittelt wird, und bei Überschreitung eines Schwellenwertes für die Ähnlichkeit das jeweilige Lastflussergebnis ausgewählt wird.

In einer weiteren bevorzugten Ausführungsform des erfindungsgemäßen Verfahrens wird mittels einer dritten Auswahleinrichtung mittels einer ersten Auswahleinrichtung aus dem Lastflussdatendatz eine Untergruppe von Lastflussergebnissen ausgewählt und für die Zustandsschätzungseinrichtung bereitgestellt wird, wobei die Lastflussergebnisse anhand einer der folgenden zeitlichen Einschränkungen ausgewählt werden: Tagesuhrzeit, Typ des Tages, Jahreszeit. Es kann auch die Topologiekonfiguration des Energienetzes berücksichtigt werden. Hierzu gibt es beispielsweise zwei Möglichkeiten. Um Speicherplatz zu sparen, speichert man für jeden Knoten des Netzes nur Verteilungen der Zustandsvariablen für jeden der 96 Tagesintervalle (alle 10 Minuten zeitliche Auflösung), Typ des Tages (Werktag, Wochenende oder Feiertag), Jahreszeit und Topologie. Für die Berechnung sucht man die Verteilungen, aus, die zu den oben genannten Suchkriterien passen.

Die andere Möglichkeit umfasst das Abspeichern der einzelnen Berechnungsergebnisse (Leistung, Blindleistung, Stromstärke und Spannung an jedem Knoten), gesammelt, unabhängig von den oben genannten Kriterien.

Diese Ausführungsform ist von Vorteil, weil durch die geschickte Auswahl der vorher simulierten Lastflussfälle eine vergleichsweise besonders genaue und schnelle Berechnung des Netzzustands im Hidden-Markov-Modell möglich wird. Als Ähnlichkeitsmaß kann z.B. der euklidische Abstand dienen. Die Untergruppe umfasst bevorzugt mehr als 5, noch mehr bevorzugt mehr 35 Lastflussergebnisse. Ganz besonders bevorzugt sind 96 Lastflussergebnisse in der Untergruppe.

In einer weiteren bevorzugten Ausführungsform des erfindungsgemäßen Verfahrens werden mittels einer zweiten Auswahleinrichtung aus dem Lastflussdatendatz Lastflussergebnisse ausgewählt und für die Zustandsschätzungseinrichtung bereitgestellt, deren zugrundeliegende Schaltzustände mit den aktuellen Schaltzuständen übereinstimmen. Dies ein Vorteil, weil durch die geschickte Auswahl der vorher simulierten Lastflussfälle eine besonders genaue und schnelle Berechnung des Netzzustands im Hidden-Markov-Modell möglich wird. Die Untergruppe umfasst bevorzugt mehr als 5, noch mehr bevorzugt mehr 35 Lastflussergebnisse. Diese Ausführungsform kann bevorzugt mit der vorgenannten Auswahl gemäß einem Ähnlichkeitsmaß kombiniert werden, um besonders genaue und schnelle Berechnungen des Systemzustands zu ermöglichen.

In einer weiteren bevorzugten Ausführungsform des erfindungsgemäßen Verfahrens wird als erste elektrische Größe mindestens eine der folgenden elektrischen Größen verwendet: elektrische Leistung, elektrische Blindleistung, elektrische Spannung, elektrische Stromstärke. Es werden dabei z.B. komplexe Zahlen zur Darstellung von Spannung und elektrischer Stromstärke eingesetzt.

In einer weiteren bevorzugten Ausführungsform des erfindungsgemäßen Verfahrens wird als zweite elektrische Größe mindestens eine der folgenden elektrischen Größen verwendet wird: elektrische Spannung, elektrische Stromstärke.

In einer weiteren bevorzugten Ausführungsform des erfindungsgemäßen Verfahrens wird für das elektrische Energieverteilungsnetz ein Mittelspannungsnetz mit einer Nennspannung von 1 kV bis 52 kV verwendet.

In einer weiteren bevorzugten Ausführungsform des erfindungsgemäßen Verfahrens wird für das elektrische Energieverteilungsnetz ein Niederspannungsnetz mit einer Nennspannung von höchstens 1 kV verwendet wird. Auch für Niederspannungsnetze können mittlerweile ausreichend genaue Topologieinformationen bereitgestellt werden.

Ausgehend von bekannten Anordnungen für eine Zustandsschätzung stellt sich ferner an die Erfindung die Aufgabe, eine Zustandsschätzungsanordnung anzugeben, mit der vergleichsweise einfach, schnell und zuverlässig der Zustand eines elektrischen Energieverteilnetzes geschätzt werden kann.

Die Erfindung löst diese Aufgabe durch eine Zustandsschätzungsanordnung nach Anspruch 10. Bevorzugte Ausführungsformen sind in den Ansprüchen 11 bis 13 beschrieben. Es ergeben sich sinngemäß die gleichen Vorteile wie eingangs für das erfindungsgemäße Verfahren erläutert.

Ausgehend von bekannten Computerprogrammprodukten für eine Zustandsschätzung stellt sich ferner an die Erfindung die Aufgabe, ein Computerprogrammprodukt anzugeben, mit dem vergleichsweise einfach, schnell und zuverlässig der Zustand eines elektrischen Energieverteilnetzes geschätzt werden kann.

Die Erfindung löst diese Aufgabe durch ein Computerprogrammprodukt nach Anspruch 14. Es ergeben sich sinngemäß die gleichen Vorteile wie eingangs für das erfindungsgemäße Verfahren erläutert.

Zur besseren Erläuterung der Erfindung zeigen in schematischer Darstellung die

Figur 1    die Verfahrensschritte zur Datenvorbereitung, und

Figur 2    die Verfahrensschritte zur Zustandsschätzung, und

Figur 3    ein IEEE Standard Testnetz mit einer Reihe von Knotenpunkten, und

Figur 4    eine Darstellung eines Zustandswechsels eines Knoten.

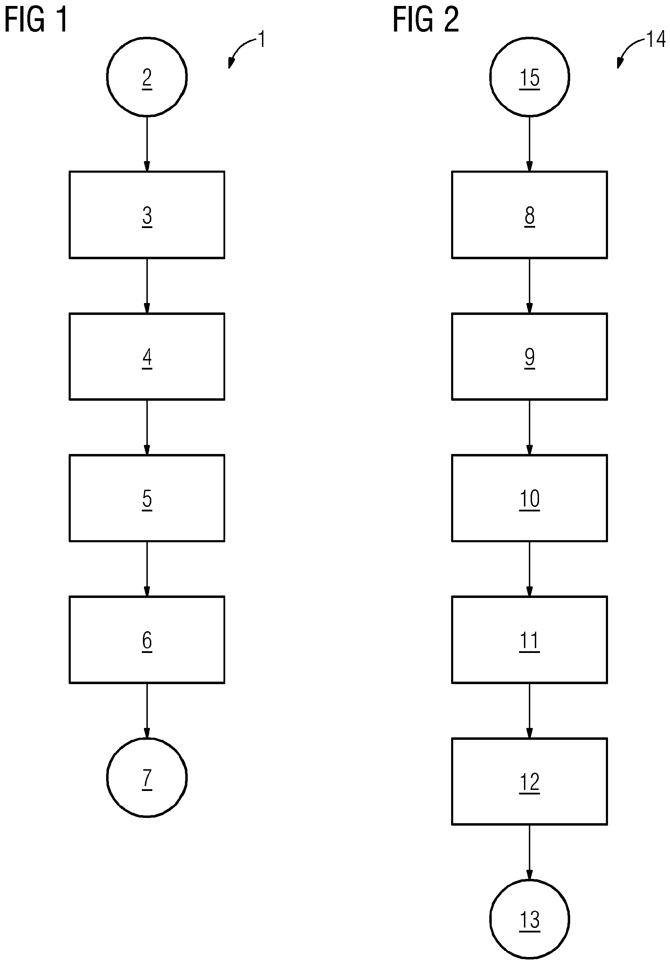

Die Figur 1 zeigt die Verfahrensschritte zur Datenvorbereitung. Das Verfahren besteht aus zwei Schritten

- Datenvorbereitung 1
- Eigentliche Zustandsschätzung.

Die Datenvorbereitung 1 wird entkoppelt von Zustandsschätzung durchgeführt und deren Ergebnisse werden in einer Datenbank bereitgestellt. Nach dem Start 2 wird ein elektrisches Netzmodell als sogenanntes bus-branch-Modell im Schritt 3 bereitgestellt. Im Schritt 4 wird eine grob aufgelöste Lastinformation als Gaußsche Normalverteilung für jeden Netzknoten bereitgestellt, d.h. welche Lasten an den einzelnen Netzknoten gemäß dem Netzmodell vorliegen könnten. Im Schritt 5 werden anhand eines Netzmodells für eine Vielzahl von Lastzuständen und für eine Vielzahl von Schaltzuständen von Schalteinrichtungen Lastflussberechnungen durchgeführt und das jeweilige Lastflussergebnis wird in Schritt 6 in einem Lastflussdatensatz gespeichert.

Das Lastflussergebnis kann entweder gesammelt in Form von Verteilungen der elektrischen Größen (komplexer Strom, Spannung und Leistung) für jeden Netzknoten abgespeichert sein für jeden der 96 Tageszeitpunkte, den Tagestyp, Jahreszeit oder Topologie usw. oder als ein separates Ergebnis für jede Simulation mit einzelnen Werten für die oben genannten elektrischen Größen an jedem Knoten.

Das Lastflussergebnis kann z.B. für jeden Knoten einen oder mehrere der folgenden Werte beinhalten: Strom, Spannung, Leitung, Blindleistung. Damit ist die Datenvorbereitung 1 im Schritt 7 abgeschlossen.

Bei der eigentlichen Zustandsschätzung 14 wird nach dem Start 7 eine Topologieinformation über das Energienetz bereitgestellt. Basierend auf dieser Topologieinformation und den Betriebsmittelparametern wird beispielsweise ein Bus-Branch-Modell inklusive Messstelleninformation und eine Admittanzmatrix erstellt.

Damit liegen Angaben über Leitungen und Verzweigungen des Netzes, d.h. über Knotenpunkte im Energienetz, vor. Ferner sind Messorte von Messstellen, die in der Regel einem Knotenpunkt räumlich zugeordnet sind, enthalten. Auch werden Schalteinrichtungen berücksichtigt in dem Bus-Branch-Modell. Mit dem Bus-Branch-Modell und der Admittanzmatrix ist es möglich, Lastflüsse im Netz zu berechnen.

Ferner wird ein Messpfad bereitgestellt, entlang dessen eine Lastfluss betrachtet wird.

Im nächsten Schritt 9 werden im Lastflussdatensatz Lastflussergebnisse mit dergleichen (oder sehr ähnlicher) Topologie ausgewählt, d.h. dass insbesondere die Schalteinrichtungen die vergleichbare Schaltstellungen aufweisen. Hier wird also aus der Datenvorbereitung 1 ein Zwischenergebnis abgefragt, was besonders einfach und schnell erfolgen kann.

Es werden entweder die gesammelten Ergebnisse in Form von Verteilungen herausgesucht oder einzelne Ergebnisse unter Anwendung der euklidischen Distanzmessung. Im zweiten Fall werden die Verteilungen im Nachgang berechnet.

Ferner sollte das ausgewählte Lastflussergebnis den ähnlichsten Messpfad im Vergleich zu dem im Schritt 8 gewählten Messpfad aufweisen.

Im Schritt 10 wird ein Hidden-Markov-Modell, basierend auf den Daten aus Schritt 9, definiert, das entweder die Spannung oder die Stromstärke als Zustandsvariable verwendet.

Im Schritt 11 wird der Viterbi-Algorithmus genutzt, um den wahrscheinlichsten Pfad entlang des Messpfads zu ermitteln.

Im Schritt 12 wird die ausgewählte Zustandsvariable zur Zustandsschätzung für das gesamte betrachtete Energienetz verwendet. Es werden anhand der erhaltenen Zustandsvariablen und der Admittanz Matrix die übrigen elektrischen Größen an den Knoten berechnet.

Damit ist in Schritt 13 das Ende des Verfahrens erreicht.

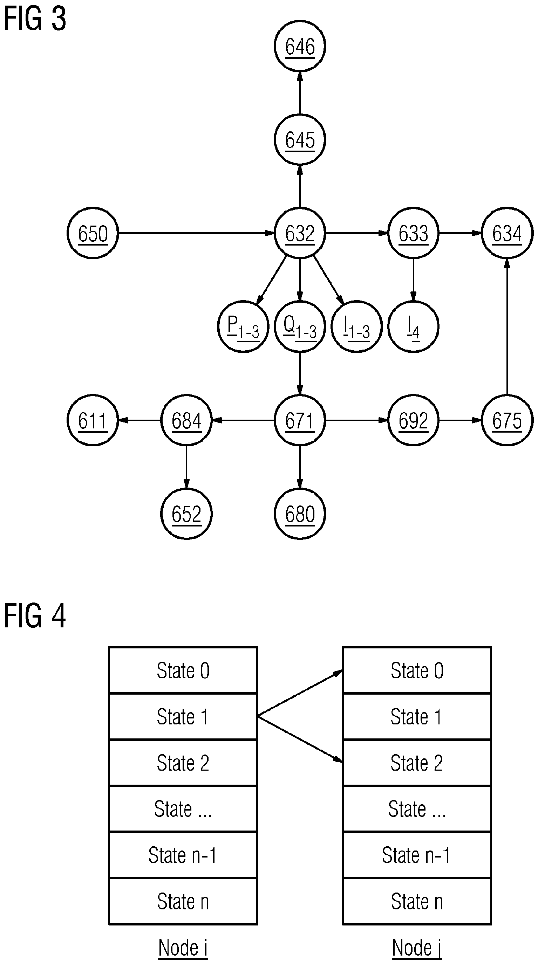

Figur 3 zeigt Figur 3 zeigt den Aufbau eines Hidden-Markov-Modells für ein Testnetz von IEEE mit eingezeichneten Zustandsübergängen zwischen den Knoten, Start- und Endknoten.

Knoten 650 ist der Startknoten. Der Knoten 650 repräsentiert eine Einspeisungssammelschiene des Energienetzes oder Teilnetzes, das berechnet werden soll. Die Knoten $P_{1-3}$, $Q_{1-3}$ und $I_{1-3}$ kennzeichnen Beobachtungen (SCADA-Messungen), die grundsätzlich an beliebigen Knoten im Netz platziert sein können.

Der Knoten 646,634,611,652,680 repräsentieren "Endknoten". Sind alle "Endknoten" erreicht, ist das Hidden-Markov-Modell durchlaufen. Die Pfeile zeigen an, wie der Graph mit den Knotenpunkten von der Einspeisung zu den "Endknoten" durchlaufen wird.

Figur 4 zeigt eine Darstellung eines Zustandswechsels eines Knotens. Der Zustandsraum der Zustandsvariable ist diskretisiert, die Zustandsübergänge und Emissionsverteilungen mittels bivariater normaler Verteilungen modelliert. Die Berechnungen der Wahrscheinlichkeiten können z.B. nach dem in der Veröffentlichung "Short-term load forecasting with discrete Hidden Markov Models" von S. Henselmeyer und M. Grzegorzek, 2020, Computer Science J. Intell. Fuzzy Syst., beschriebenen Verfahren erfolgen.

Abschließend kann das Erzeugen eines Hidden-Markov-Modells wie folgt beschrieben werden:

- Erzeugen von Übergangs- und Emissionsverteilungen basierend auf den Daten aus dem Lastflussdatensatz
- Diskretisieren des Zustandsraums (d.h. gleicher Zustandsraum für jeden Knoten)
- Berechnen eines optimalen Pfads mittels des Viterbi-Verfahrens
- Abbilden der Werte der Zustandsvariablen auf die übrigen Werte aus dem Lastflussdatensatz unter Benutzung von Verteilungen der Wahrscheinlichkeit.

**Patentansprüche**

1. Verfahren für eine Zustandsschätzung eines elektrischen Energieverteilungsnetzes,
**dadurch gekennzeichnet, dass**

   mittels einer Lastflussberechnungseinrichtung anhand eines Netzmodells, das Knotenpunkte und Schalteinrichtungen und Messorte berücksichtigt, für eine Vielzahl von Lastzuständen und für eine Vielzahl von Schaltzuständen der Schalteinrichtungen Lastflussberechnungen durchgeführt und das jeweilige Lastflussergebnis in einem Lastflussdatensatz gespeichert wird, wobei der Lastflussdatensatz für jeden Knotenpunkt im Netzmodell eine Wahrscheinlichkeitsverteilung für jeweils einen Wert mindestens einer ersten elektrischen Größe bereitstellt, und dass
   mittels einer Zustandsschätzungseinrichtung eine Zustandsschätzung, die die jeweiligen Spannungswerte an den Knotenpunkten beinhaltet, für das elektrische Energieverteilungsnetz bestimmt wird, wobei
   unter Berücksichtigung des Lastflussdatensatzes und aktueller Schaltzustände von Schalteinrichtungen und aktueller Messwerte, die an den Messorten erfasst wurden, ein Hidden-Markov-Modell verwendet wird, um einen wahrscheinlichsten Wert für eine zweite elektrische Größe für jeden Knotenpunkt zu bestimmen.

2.  Verfahren nach Anspruch 1, **dadurch gekennzeichnet, dass** für die Bestimmung des wahrscheinlichsten Werts für die zweite elektrische Größe ein Viterbi-Algorithmus verwendet wird.

3.  Verfahren nach Anspruch 1 oder 2, **dadurch gekennzeichnet, dass** mittels einer ersten Auswahleinrichtung aus dem Lastflussdatendatz eine Untergruppe von Lastflussergebnissen ausgewählt und für die Zustandsschätzungseinrichtung bereitgestellt wird, wobei anhand eines Ähnlichkeitsmaßes die Ähnlichkeit von an Messorten gemessenen aktuellen Messwerten zu den Wahrscheinlichkeitsverteilungen ermittelt wird, und bei Überschreitung eines Schwellenwertes für die Ähnlichkeit das jeweilige Lastflussergebnis ausgewählt wird.

4.  Verfahren nach einem der vorhergehenden Ansprüche, **dadurch gekennzeichnet, dass** mittels einer ersten Auswahleinrichtung aus dem Lastflussdatendatz eine Untergruppe von Lastflussergebnissen ausgewählt und für die Zustandsschätzungseinrichtung bereitgestellt wird, wobei die Lastflussergebnisse anhand einer der folgenden zeitlichen Einschränkungen ausgewählt werden: Tagesuhrzeit, Typ des Tages, Jahreszeit.

5.  Verfahren nach einem der vorhergehenden Ansprüche, **dadurch gekennzeichnet, dass** mittels einer zweiten Auswahleinrichtung aus dem Lastflussdatendatz Lastflussergebnisse ausgewählt und für die Zustandsschätzungseinrichtung bereitgestellt werden, deren zugrundeliegende Schaltzustände mit den aktuellen Schaltzuständen übereinstimmen.

6.  Verfahren nach einem der vorhergehenden Ansprüche, **dadurch gekennzeichnet, dass** als erste elektrische Größe mindestens eine der folgenden elektrischen Größen verwendet wird: elektrische Leistung, elektrische Blindleistung, elektrische Spannung, elektrische Stromstärke.

7.  Verfahren nach einem der vorhergehenden Ansprüche, **dadurch gekennzeichnet, dass** als zweite elektrische Größe mindestens eine der folgenden elektrischen Größen verwendet wird: elektrische Spannung, elektrische Stromstärke.

8.  Verfahren nach einem der vorhergehenden Ansprüche, **dadurch gekennzeichnet, dass** für das elektrische Energieverteilungsnetz ein Mittelspannungsnetz mit einer Nennspannung von 1 kV bis 52 kV verwendet wird.

9.  Verfahren nach einem der Ansprüche 1 bis 7, **dadurch gekennzeichnet, dass** für das elektrische Energieverteilungsnetz ein Niederspannungsnetz mit einer Nennspannung von höchstens 1 kV verwendet wird.

10. Zustandsschätzungsanordnung für eine Zustandsschätzung eines elektrischen Energieverteilungsnetzes, **dadurch gekennzeichnet, dass**

    eine Lastflussberechnungseinrichtung ausgebildet ist, anhand eines Netzmodells, das Knotenpunkte und Schalteinrichtungen und Messsorte berücksichtigt, für eine Vielzahl von Lastzuständen und für eine Vielzahl von Schaltzuständen der Schalteinrichtungen Lastflussberechnungen durchzuführen und das jeweilige Lastflussergebnis in einem Lastflussdatensatz zu speichern, wobei der Lastflussdatensatz für jeden Knotenpunkt im Netzmodell eine Wahrscheinlichkeitsverteilung für jeweils einen Wert mindestens einer ersten elektrischen Größe bereitstellt, und dass
    eine Zustandsschätzungseinrichtung ausgebildet ist, eine Zustandsschätzung, die die jeweiligen Spannungswerte an den Knotenpunkten beinhaltet, für das elektrische Energieverteilungsnetz zu bestimmen, wobei unter Berücksichtigung des Lastflussdatensatzes und aktueller Schaltzustände von Schalteinrichtungen und aktueller Messwerte, die an den Messorten erfasst wurden, ein Hidden-Markov-Modell verwendet wird, um einen wahrscheinlichsten Wert für eine zweite elektrische Größe für jeden Knotenpunkt zu bestimmen.

11. Zustandsschätzungsanordnung nach Anspruch 10, **dadurch gekennzeichnet, dass** die Zustandsschätzungseinrichtung ausgebildet ist, für die Bestimmung des wahrscheinlichsten Werts für die zweite elektrische Größe jeweils einen Viterbi-Algorithmus zu verwenden.

12. Zustandsschätzungsanordnung nach Anspruch 10 oder 11, **dadurch gekennzeichnet, dass** eine erste Auswahleinrichtung ausgebildet ist, aus dem Lastflussdatendatz eine Untergruppe von Lastflussergebnissen auszuwählen und für die Zustandsschätzungseinrichtung bereitzustellen, wobei anhand eines Ähnlichkeitsmaßes die Ähnlichkeit von an Messorten gemessenen aktuellen Messwerten zu den Wahrscheinlichkeitsverteilungen ermittelt wird, und bei Überschreitung eines Schwellenwertes für die Ähnlichkeit das jeweilige Lastflussergebnis auszuwählen.

13. Zustandsschätzungsanordnung nach einem der Ansprüche 10 bis 12, **dadurch gekennzeichnet, dass** eine zweite Auswahleinrichtung ausgebildet ist, aus dem Lastflussdatendatz Lastflussergebnisse auszuwählen und für die Zustandsschätzungseinrichtung bereitzustellen, deren zugrundeliegende Schaltzustände mit den aktuellen Schaltzuständen übereinstimmen.

14. Computerprogrammprodukt, umfassend Befehle, die bei der Ausführung des Programms durch einen Computer diesen veranlassen, das Verfahren nach einem der Ansprüche 1 bis 8 auszuführen.

# FIG 1

1

(2)

⬇

| 3 |
|---|

⬇

| 4 |
|---|

⬇

| 5 |
|---|

⬇

| 6 |
|---|

⬇

(7)

# FIG 2

14

(15)

⬇

| 8 |
|---|

⬇

| 9 |
|---|

⬇

| 10 |
|----|

⬇

| 11 |
|----|

⬇

| 12 |
|----|

⬇

(13)

FIG 3

FIG 4

Europäisches
Patentamt

European
Patent Office

Office européen
des brevets

**EUROPÄISCHER RECHERCHENBERICHT**

**Nummer der Anmeldung**

**EP 23 17 2782**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/209841 A1 (SRINIVASAN GURUPRASAD [IN] ET AL) 2. Juli 2020 (2020-07-02) * Absätze [0001], [0003], [0004], [0008], [0009], [0025], [0075], [0089] * ----- | 1-14 | INV. H02J3/00 H02J13/00 |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 23. Oktober 2023 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 2782

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2023

| Im Recherchenbericht angeführtes Patentdokument | Datum der Veröffentlichung | Mitglied(er) der Patentfamilie | Datum der Veröffentlichung |
|---|---|---|---|
| US 2020209841 A1 | 02-07-2020 | US 2020209841 A1 | 02-07-2020 |
| | | US 2023152794 A1 | 18-05-2023 |
| | | WO 2020140104 A1 | 02-07-2020 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SIEMENS AG.** *Intelligent control center technology - Spectrum Power,* 2017
- **SIEMENS AG.** *Spectrum Power Aktives Netzwerkmanagement,* 2016
- **VON DZAFIC et al.** Real-Time Distribution System State Estimation. *IEEE 978-1-4244-7398-4,* 2010
- **VON DZAFIC et al.** Real-Time Estimation of Loads in Radial and Unsymmetrical Three-Phase Distribution Networks. *IEE 0885-8950,* 2013
- **VON S. HENSELMEYER ; M. GRZEGORZEK.** Short-term load forecasting with discrete Hidden Markov Models. *Computer Science J. Intell. Fuzzy Syst.,* 2020